# EUROPÄISCHE PATENTSCHRIFT

(11) **EP 1 186 804 B1**
(45) Veröffentlichungstag und Bekanntmachung des Hinweises auf die Patenterteilung: **01.10.2003**
(21) Anmeldenummer: 01120302.3
(22) Anmeldetag: 24.08.2001
(51) Int. Cl.: F16H 57/08

(54) **Planetenträger für ein Planetengetriebe**
Planet carrier for a planetary gearing
Porte-satellite pour une transmission planétaire

(30) Priorität: 01.09.2000 DE 10043564
(43) Veröffentlichungstag der Anmeldung: 13.03.2002
(73) Patentinhaber: A. Friedr. Flender GmbH, 46395 Bocholt (DE); Winergy AG, 46562 Voerde (DE)
(72) Erfinder: Klein-Hitpass, Arno, 46395 Bocholt (DE)
(74) Vertreter: Radünz, Ingo, Dipl.-Ing.

(56) Entgegenhaltungen:
- EP-A- 0 844 417
- DE-A- 2 605 227
- GB-A- 949 987
- US-A- 3 939 736

## Beschreibung

Die Erfindung betrifft einen Planetenträger für ein Planetengetriebe mit den Merkmalen des Oberbegriffes des Anspruches 1.

Ein solcher Planetenträger ist aus der DE-A-2 605 227 bekannt. Bei diesem bekannten Planetenträger sind die seitlichen Wangen mit Stegansätzen versehen, die durch eine Schweißnaht miteinander verbunden werden.

Die technischen und ökonomischen Anforderungen an moderne Planetengetriebe werden immer höher. Planetengetriebe sind Drehmoment- bzw. Leistungsgetriebe mit einer sehr hohen Leistungsdichte. Diese Getriebe bestehen hauptsächlich, bis auf den Planetenträger, aus geometrisch einfachen Bauteilen. Der Planetenträger ist hingegen ein sehr komplexes Bauteil mit unterschiedlichen Funktionen. Zum einen positioniert er die Planeten im Getriebe, zum anderen wird er mit dem maximalen Drehmoment des Getriebes und eventuellen Biegemomenten aus der Arbeitswelle belastet. Er besteht fast ausschließlich aus einem kostenintensiven hochfesten Gusswerkstoff.

Aus der US-A-3 939 736 ist ein einstückiger durch Gießen hergestellter Planetenträger bekannt. Durch die Form des Planetenträgers ist der Gießprozess zu seiner Herstellung sehr aufwendig und zeitintensiv. Eine sinnvolle ökonomische Optimierung des Planetenträgers kann vor allem durch die Verbesserung seiner gieß- und strukturmechanischen Eigenschaften erfolgen.

Bekannte Planetenträger enthalten unter anderem einen als Hohlwellenteil ausgebildeten Wellenflansch mit anschließender Wange. Über Stege ist eine zweite Wange mit der ersten Wange verbunden. Die Wangen enthalten Aufnahmebohrungen für die Achsen, auf denen die Planetenräder gelagert sind. Über diese Bohrungen wird das Drehmoment bei Antrieb über das Sonnenritzel in den Planetenträger eingeleitet und über einen Schrumpfsitz oder eine Kupplung an dem Wellenflansch in eine Arbeitsmaschinenwelle abgeleitet. Erfolgt der Abtrieb über das Sonnenritzel, ist der Drehmomentfluss entgegengesetzt gerichtet. An beiden Wangen befinden sich zusätzlich Lagersitze, über die der Planetenträger im Getriebe positioniert wird. Durch den für das wellenflanschseitige Lager benötigten Absatz entsteht eine Kerbe, die Spannungskonzentrationen hervorruft. Die Wangen, die Stege und der Wellenflansch bestehen aus geometrisch einfachen Grundkörpern. So werden die Wangen durch Scheiben, die Stege durch ein teilweise hohles Dreieckprofil mit konstantem Querschnitt und der Wellenflansch durch einen Hohlzylinder gebildet. Zusammengesetzt ergeben diese Grundkörper jedoch ein sehr komplexes Gebilde mit Durchmessersprüngen, Kerben und Massenansammlungen, die die gieß- und strukturmechanischen Eigenschaften deutlich beeinträchtigen.

Der Erfindung liegt die Aufgabe zugrunde, einen Planetenträger zu entwickeln, der sehr gute gieß- und strukturmechanische Eigenschaften bei minimalen Herstellungskosten aufweist.

Die Aufgabe wird bei einem gattungsgemäßen Planetenträger erfindungsgemäß durch die Merkmale der Ansprüche 1 und 5 gelöst. Vorteilhafte Ausgestaltungen der Erfindung sind Gegenstand der Unteransprüche.

Der erfindungsgemäße Planetenträger besteht aus einem einstückigen Gussteil, bei dem sich durch eine gezielte Übergangsgestaltung der bisher einzelnen Grundkörper sowie der geometrischen Änderung der Stege Kerben und Massenkonzentrationen vermeiden lassen. Es entsteht ein Planetenträger mit einer nahezu gleichmäßigen Wanddicke, wodurch ebenfalls eine gezielte Erstarrung des Rohlings nach dem Abgießen abgesichert wird. Dies hat den Vorteil, dass der Einsatz von Steigern, Kühleisen und Kokillen minimiert wird. Teilweise kann auch auf diese gießtechnischen Maßnahmen verzichtet werden. Die strukturmechanischen Eigenschaften im Bereich des Übergangs zwischen Wellenflansch und Wange werden durch Verschließen der Planetenachsenbohrungen und durch den Einsatz eines neu gestalteten Entlastungseinstichs deutlich verbessert.

Ein Ausführungsbeispiel der Erfindung ist in der Zeichnung dargestellt und wird im Folgendem näher erläutert. Es zeigen:

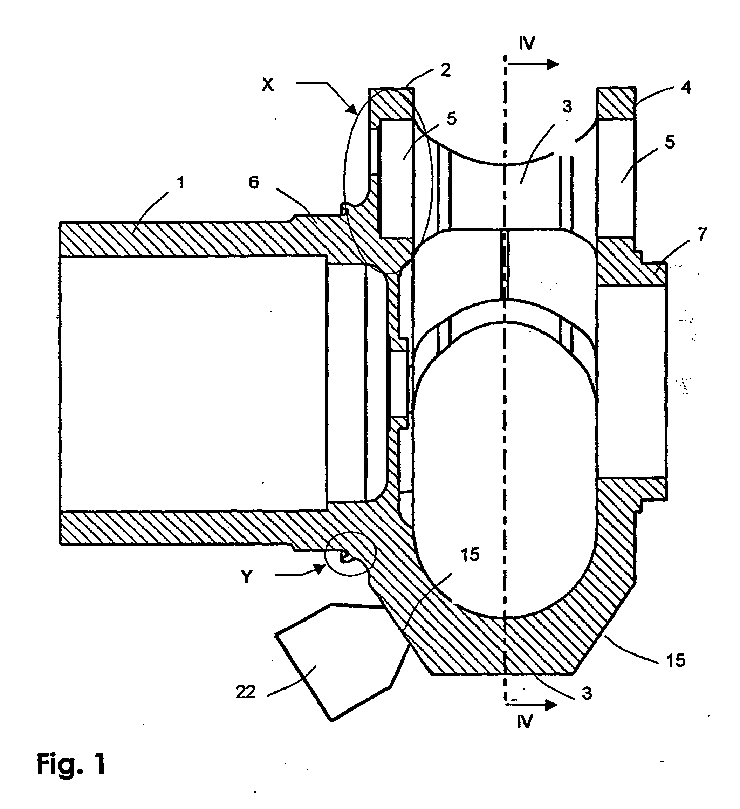

- Fig. 1: den Längsschnitt durch einen Planetenträger,
- Fig. 2: den Planetenträger in perspektivischer Darstellung,
- Fig. 3: die Seitenansicht des Planetenträgers,
- Fig. 4: den Schnitt IV - IV nach Fig. 1,
- Fig. 5: die Einzelheit X nach Fig. 1 und

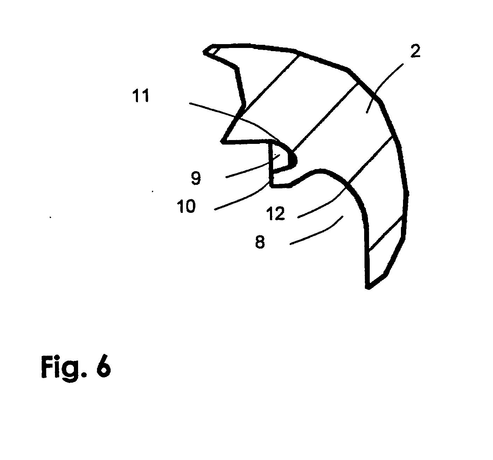

- Fig. 6: die Einzelheit Y nach Fig. 1.

Von einem aus Sonnenritzel, Planetenrädern und Hohlrad bestehenden Planetengetriebe ist nur der die Planetenrädern aufnehmende Planetenträger gezeigt. Der Planetenträger enthält einen als Hohlwelle ausgebildeten Wellenflansch 1, der mit einer ersten Wange 2 verbunden ist. Diese erste Wange 2 ist über Stege 3 mit einer zweiten Wange 4 verbunden. Die zweite Wange 4 ist mit einem Ringflansch versehen, der als Lagersitz 7 dient. Ein weiterer Lagersitz 6 ist auf der dem Wellenflansch 1 zugewandten Seite der ersten Wange 2 vorgesehen. Auf diese Lagersitze 6, 7 werden nicht gezeigte Lager gesetzt, über die der Planetenträger in einem nicht gezeigten Getriebegehäuse drehbar gelagert ist. Jede Wange 2, 4 ist mit mehreren, im vorliegenden Fall drei Bohrungen 5 versehen, die paarweise miteinander fluchten und der Aufnahme der Achsen der Planetenrädern dienen.

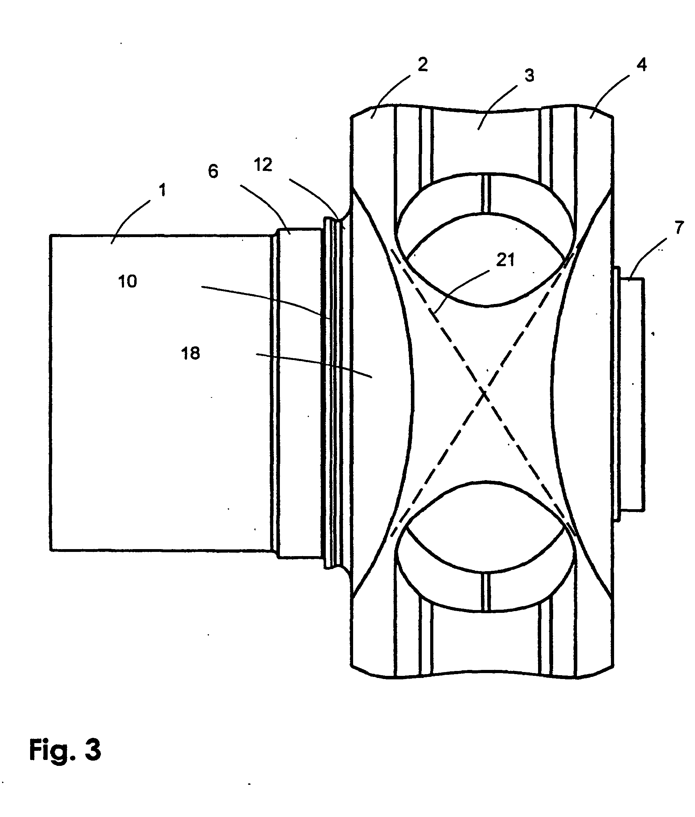

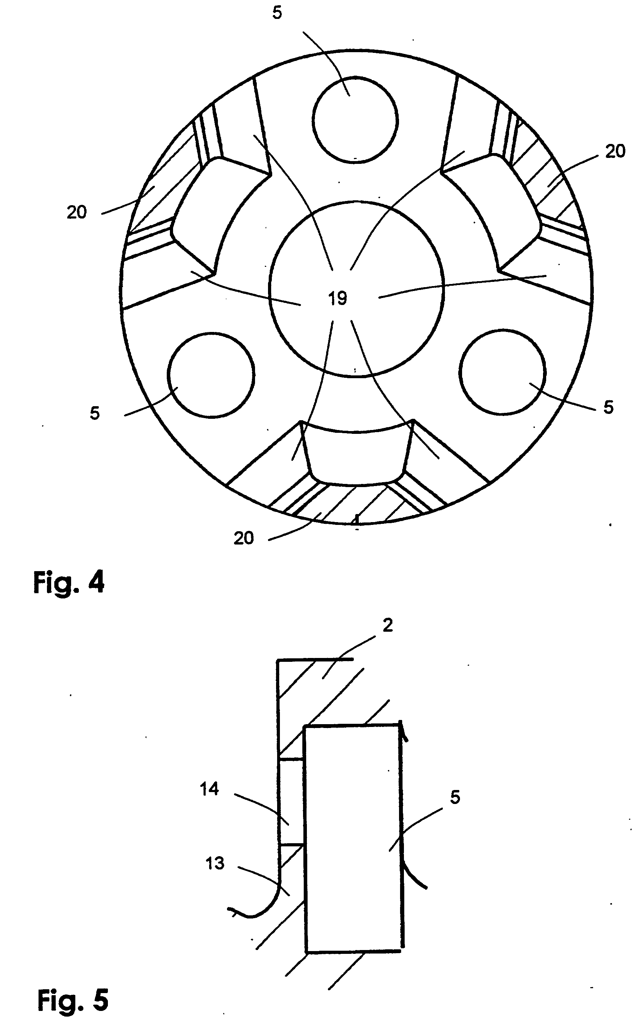

Der erfindungsgemäße Planetenträger ist als ein einstückiges Gussteil ausgebildet. Die die Wangen 2, 4 miteinander verbindenden Stege 3 dieses einstückigen Planetenträgers sind mittig eingeschnürt. Dadurch entsteht die Einschnürung 17. Die einander gegenüber liegenden Seiten der Stege 3 bilden zusammen jeweils eine Mantelöffnung 19, durch die im eingebauten Zustand des Planetengetriebes ein Planetenrad hindurch reicht. Diese Mantelöffnungen 19 zeigen einen großen Durchmesser. Die Wangen 2, 4 sind an ihrem kreisförmigen Umfang seitlich mit Abschrägungen 15 versehen und über diese Abschrägungen 15 mit den Enden der Stege 3 verbunden. Die Stege 3 sind als Trapezprofile 20 (Fig. 4) gestaltet, die sich zur Mitte hin in radialer und tangentialer Richtung des Planetenträgers, also in ihrer Höhe und Breite verjüngen. Betrachtet man den Rücken der Stege 3 (Fig. 3), so ist die für diesen Planetenträger markante neuartige Kreuzform 21 zu erkennen.

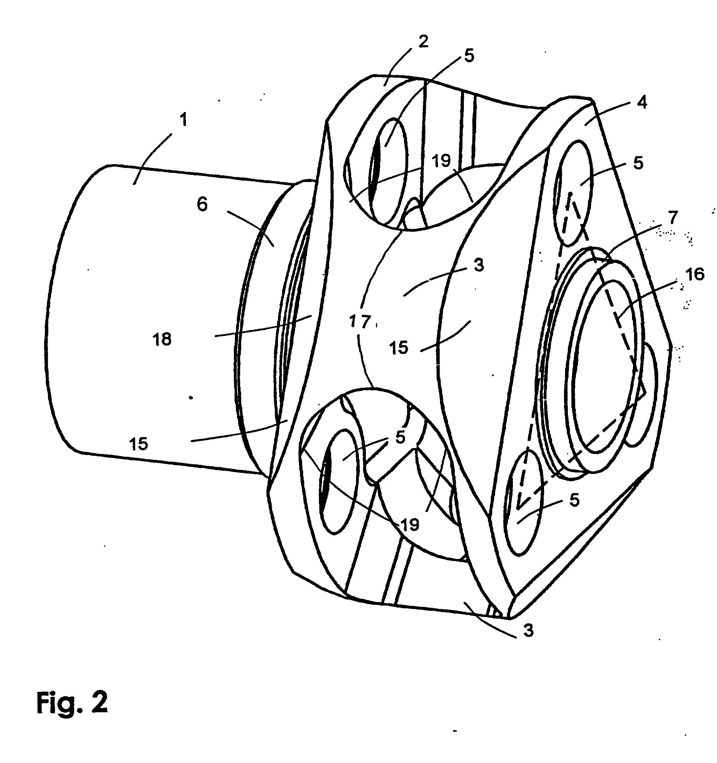

In dem durch die Planetenachsenbohrungen 5 aufgespannten Dreieck 16 (Figur 2) verläuft der Kraftfluss in den Wangen 2, 4. Die erste, wellenflanschseitige Wange 2 leitet den Kraftfluss direkt und die gegenüberliegende, zweite Wange 4 über die Stege 3 und die erste Wange 2 in den Wellenflansch 1 ab. Durch die Abschrägungen 15 an den beiden Wangen 2, 4 im Bereich der Stegenden und die großen Radien an den Mantelöffnungen 19 ist hiermit die Formgestaltung des Planetenträgers optimal auf den Kraftfluss abgestimmt.

Durch die Abschrägungen 15 entstehen an der ersten Wange 2 im wesentlichen ebene Flächen 18, die die Anbindung von Speisern 22 oder Steigern ermöglichen. Diese Speiser und Steiger werden bei der Herstellung des Planetenträgers durch Gießen in einer Kokille benötigt. Dabei wird durch die Speiser der flüssige Werkstoff in die Kokille eingespeist, während aus den Steigern während der Erstarrung des Rohlings in der Kokille der flüssige Werkstoff nachfließt. Die Innengeometrie der Stege 3 und der Wange 2, 4 ist so gestaltet, dass der Querschnitt dieser Elemente in Richtung auf die Speiser 22 oder Steiger kontinuierlich ansteigt. Durch diese Formgestaltung wird gewährleistet, dass der flüssige Werkstoff während der Abkühlung in der Kokille zuletzt in den Speisern 22 und Steigern erstarrt.

Die Stege 3 lassen sich im mechanischen Ersatzmodell als eine Kombination aus Kragarm und doppelt eingespannten Biegebalken betrachten. Diese Eigenschaft erlaubt eine Querschnittsoptimierung der Stege 3 bezüglich der hier nahezu ausschließlich vorliegenden Schubspannungen. Die hierdurch ermöglichte Geometrie der Stege 3, als mittig eingeschnürte Trapezprofile 20, ist hiermit optimal auf die strukturmechanischen Anforderungen an den Planetenträger abgestimmt.

Mit dem beschriebenen Profil der Stege 3 entstehen gleichzeitig sehr weiche Übergänge zwischen den Stegen 3 und den Wangen 2, 4. Das dünnwandige Trapezprofil 20 ermöglicht eine sehr große Stützweite der Stege 3, wodurch die relative Verdrehung der Wangen 2, 4 minimiert wird. Gleichzeitig wird der sonst unter Last S-förmig ausgeprägten Verformung der Wangen entgegengewirkt.

Der Lagersitz 6 auf der dem Wellenflansch 1 zugewandte Seite des Planetenträgers ist seitlich durch eine aufgesetzte Nase 10 begrenzt, die den sonst üblichen Absatz ersetzt. Diese Nase 10 ist durch zwei Einstiche 8, 9 mit großen Radien 11, 12 gebildet. Hierbei wird der Kraftfluss so umgeleitet, dass er die beiden großen Radien 11, 12 der Einstiche tangiert.

Die in der ersten Wange 2 (Fig. 5) auslaufenden Planetenachsenbohrungen 5 sind als Sacklochbohrungen ausgebildet und wellenflanschseitig mit einer dünnen Wand 13 verschlossen. Dadurch werden ebenfalls Spannungskonzentrationen im Übergangsbereich vermieden und eine deutliche Erhöhung der Beanspruchbarkeit des Planetenträgers erreicht. Die Wand 13 ist mit einem kleinen, kreisförmigen, exzentrisch angeordneten Durchbruch 14 versehen. Der exzentrische Durchbruch 14 wird für den Abfluss der bei der spanenden Bearbeitung des Planetenträgers benötigte Kühlflüssigkeit und des abgespanten Materials und für die spätere Zufuhr des Schmierstoffes für die Planetenradlagerung während des Betriebes des Getriebes benutzt.

Durch die strukturmechanischen Veränderungen des aus dem einstückigen Gussteil gebildeten Planetenträgers wird der Werkstoff besser ausgenutzt, und es entsteht ein Körper mit einer gleichmäßigen Wanddicke. Diese Planetenträgerform ermöglicht einen kostengünstigen Gießprozess, der die Verwendung von Kühleisen, Steigern und Kokillen minimiert. Es kann sogar unter bestimmten Voraussetzungen auf diese Hilfsmittel verzichtet werden. Darüber hinaus integriert der erfindungsgemäße Planetenträger weitere Funktionen, die bei den bekannten Planetenträgern mit aufwendigen Buchsen, Anlaufscheiben und ähnlichen Konstruktionselementen erbracht werden.

Die erfindungsgemäße Gestaltung des Planetenträgers erfüllt die hohen technischen Anforderungen und reduziert gleichzeitig durch sein geringes Gewicht und seine guten Gießeigenschaften die Herstellungskosten deutlich.

## Patentansprüche

1. Planetenträger für ein Planetengetriebe bestehend aus einer ersten Wange (2), die auf der einen Seite mit einem Wellenflansch (1) und auf der anderen Seite über mittig eingeschnürte Stege (3) mit einer zweiten Wange (4) verbunden ist, wobei die einander gegenüber liegenden Seiten der Stege (3) Mantelöffnungen (19) begrenzen und wobei in jeder Wange (2, 4) mehrere jeweils miteinander fluchtende Bohrungen (5) zur Aufnahme der Achsen von Planetenrädern vorgesehen sind, **dadurch gekennzeichnet, dass** der Planetenträger als ein einstückiges Gussteil ausgebildet ist, dass die Wangen (2, 4) seitlich mit Abschrägungen (15) versehen und über diese Abschrägungen (15) mit den Enden der Stege (3) verbunden sind und dass die Stege (3) zur Mitte hin in radialer und tangentialer Richtung des Planetenträgers verjüngte Trapezprofile (20) bilden.

2. Planetenträger nach Anspruch 1, **dadurch gekennzeichnet, dass** der Querschnitt der Stege (3) und der Wangen (2, 4) in Richtung auf die Abschrägungen (15) stetig ansteigt.

3. Planetenträger nach einem der Ansprüche 1 oder 2, **dadurch gekennzeichnet, dass** der Lagersitz (6) des Planetenträgers auf der dem Wellenflansch (1) zugewandten Seite seitlich durch eine Nase (10) begrenzt ist, die durch zwei axiale Einstiche (8, 9) mit großem Radius gebildet ist.

4. Planetenträger nach einem der Ansprüche 1 bis 3, **dadurch gekennzeichnet, dass** die Bohrungen (5) zur Aufnahme der Achsen der Planetenräder auf der dem Wellenflansch (1) zugewandten Seite des Planetenträgers als Sacklochbohrungen ausgebildet sind, in deren Grund jeweils ein kreisförmiger Durchbruch (14) exzentrisch angeordnet ist.

5. Verfahren zur Herstellung eines Planetenträgers nach den Ansprüchen 1 bis 4, durch Gießen in einer Kokille, an der Speiser (22) oder Steiger angebracht sind, **dadurch gekennzeichnet, dass** die Speiser (22) oder Steiger an die Abschrägungen (15) der einen Wange (2) des zu gießenden Planetenträgers angebunden werden.

## Claims

1. Planetary carrier for a planetary gear, consisting of a first cheek (2), which is connected at one side with a shaft flange (1) and at the other side with a second cheek (4) by way of centrally necked webs (3), wherein the mutually opposite sides of the webs (3) bound openings (19) at the circumference and wherein several mutually aligned bores (5) for reception of the axles of planetary wheels are provided in each cheek (2, 4), **characterised in that** the planetary carrier is constructed as an integral cast part, that the cheeks (2, 4) are laterally provided with chamfers (15) and are connected by way of these chamfers (15) with the ends of the webs (3) and that the webs (3) form tapered trapezium profiles (20) in radial and tangential direction towards the centre.

2. Planetary carrier according to claim 1, **characterised in that** the cross-section of the webs (3) and the cheeks (3, 4) steadily increases in direction towards the chamfers (15).

3. Planetary carrier according to one of claims 1 and 2, **characterised in that** the bearing seat (6) of the planetary carrier at the side facing the shaft flange (1) is laterally bounded by a nose (10) formed by two axial recesses (8, 9) of large radius.

4. Planetary carrier according to one of claims 1 to 3, **characterised in that** the bores (5) for reception of the axles of the planetary wheels are formed at the side of the planetary carrier facing the shaft flange (1) as blind bores, in the base of each of which a circular passage (14) is eccentrically arranged.

5. Method of producing a planetary carrier according to claims 1 to 4, by casting in a mould, at which sprues (22) or risers are formed, **characterised in that** the sprues (22) or risers are joined to the chamfers (15) of one cheek (2) of the planetary carrier to be cast.

## Revendications

1. Porte-satellites pour un engrenage planétaire composé d'une première joue (2), qui est reliée sur l'un des côtés à une bride d'arbre (1) et sur l'autre côté à une seconde joue (4) par l'intermédiaire de traverses (3) rétrécies au centre, les côtés mutuellement en vis-à-vis des traverses (3) délimitant des ouvertures d'enveloppe (19) et plusieurs trous (5), respectivement alignés les uns sur les autres, étant prévus dans chaque joue (2, 4) pour recevoir les axes des roues satellites, **caractérisé en ce que** le porte-satellites est réalisé sous forme d'une pièce moulée monobloc, que les joues (2, 4) sont munies latéralement de chanfreins (15) et sont reliées par l'intermédiaire de ces chanfreins (15) aux extrémités des traverses (3), et que les traverses (3) forment des profilés trapézoïdaux (20) rétrécis vers le centre dans la direction radiale et tangentielle du porte-satellites.

2. Porte-satellites suivant la revendication 1, **caractérisé en ce que** la section transversale des traverses (3) et des joues (2, 4) augmente continûment en direction des chanfreins (15).

3. Porte-satellites suivant l'une des revendications 1 et 2, **caractérisé en ce que** le siège de palier (6) du porte-satellites est délimité latéralement sur le côté tourné vers la bride d'arbre (1) par un ergot (10), qui est formé par deux gorges axiales (8, 9) de grand rayon.

4. Porte-satellites suivant l'une des revendications 1 à 3, **caractérisé en ce que** les trous (5) pour recevoir les axes des roués satellites sur le côté du porte-satellites tourné vers la bride d'arbre (1) sont réalisés sous forme de trous borgnes, dans le fond de chacun desquels est disposée de façon excentrée une percée circulaire (14).

5. Procédé pour la fabrication d'un porte-satellites suivant les revendications 1 à 4, par moulage dans une coquille contre laquelle sont placés des masselottes (22) ou évents, **caractérisé en ce que** les masselottes (22) ou évents sont rattachés aux chanfreins (15) de l'une des joues (2) du porte-satellites à mouler.
